Europäisches Patentamt

European Patent Office

Office européen des brevets

(19)

(11) Numéro de publication: **0 072 322
B1**

(12)

# FASCICULE DE BREVET EUROPEEN

(45) Date de publication du fascicule du brevet:
13.02.85

(51) Int. Cl.⁴: **A 23 J 3/00**, A 23 L 3/20,
A 23 K 1/00

(21) Numéro de dépôt: 82401478.1

(22) Date de dépôt: 05.08.82

(54) Procédé de stérilisation rapide de matières protéiniques.

(30) Priorité: 07.08.81 FR 8115392

(43) Date de publication de la demande:
16.02.83 Bulletin 83/7

(45) Mention de la délivrance du brevet:
13.02.85 Bulletin 85/7

(84) Etats contractants désignés:
AT BE CH DE FR GB IT LI LU NL SE

(56) Documents cités:
BE - A - 334 587
FR - A - 2 424 710
NL - A - 6 400 437

CHEMICAL ABSTRACTS, vol. 84, no. 11, 15 mars 1976,
page 330, no. 72755g, Columbus, Ohio, USA

(73) Titulaire: UNISABI SA, F-45550 Saint-Denis de l'Hotel
(FR)

(72) Inventeur: Guitteny, Jean-Louis, 16, route d'Orléans,
F-45150 Jargeau (FR)
Inventeur: Pernod, Roger, La Grande Loublère,
F-45460 Bouzy la Forêt (FR)
Inventeur: Roques, Christian, 20 Rue de la Haute Croix,
F-45800 St, Jean de Braye (FR)
Inventeur: van Tran, Guy, 138 rue du Maréchal Foch,
F-45370 Clery Saint André (FR)

(74) Mandataire: Martin, Jean-Jacques et al, Cabinet
REGIMBEAU 26, Avenue Kléber, F-75116 Paris (FR)

## Description

La présente invention concerne un procédé de stérilisation rapide de matières protéiniques destinées à l'industrie alimentaire, et principalement de matières protéiniques d'origine animale, en particulier la viande et les abats.

La technique antérieure couramment utilisée par l'industrie alimentaire pour assurer la stérilisation
des matières protéiniques, et en particulier de matières protéiniques d'origine animale, consiste à
soumettre lesdites matières à un traitement thermique à une température de l'ordre de 120° C pendant
environ 2 heures, par exemple dans un cuiseur.

Le principal inconvénient de cette technique classique de stérilisation réside bien sûr dans une
consommation excessive d'énergie et également dans une perte de temps important pour des industries dont un souci essentiel est de pouvoir mettre en oeuvre des procédés en continu.

Outre la perte importante de temps et d'énergie qu'occasionne le type classique de stérilisation par
chauffage à haute température pendant une longue durée, une telle opération exerce très souvent une
influence néfaste sur l'appétence et les qualités organoleptiques des viandes ou des abats ainsi
traités, ceci en raison de phénomènes de coagulation dûs à la surchauffe ou à la surcuisson. Il convient
également de noter que ces phénomènes des coagulation, principalement observés dans le cas de
certains abats comme le foie ou encore dans le cas du sang, peuvent entraîner des encroûtages voire
même des blocages complets de certains équipements des unités de fabrication.

L'état de la technique antérieure peut en outre être complété par la citation de FR-A-2 424 710 qui
décrit l'hydrolyse de déchets protéiniques pour en faire des concentrés comestibles, et de Chemical
Abstracts, vol. 84, n° 11, 15 mars 1976, page 330, n° 72755g, qui évoque un procédé consistant à broyer
des déchets, à les bouillir à 100° C, puis à les hydrolyser par voie enzymatique.

La présente invention s'est précisément fixé pour but de supprimer tous les inconvénients inhérents
à la technique antérieure précitée.

Le procédé de stérilisation conforme à la présente invention consiste à effectuer les opérations
successives suivantes:

a)  fluidification de ladite matière protéinique pour l'amener à l'état d'une bouillie visqueuse dont les
    particules solides ont une dimension moyenne de l'ordre de 0,1 à 20 mm, et de préférence de
    l'ordre de 0,5 à 10 mm,

b)  hydrolyse de ladite bouillie, et

c)  stérilisation par traitement thermique à haute température en couche mince de l'hydrolysat
    pendant une courte durée de l'ordre de 3 secondes à 15 minutes.

Un tel procédé a permis d'obtenir une stérilisation parfaite des matières protéiniques traitées, mise
en évidence par d'excellents résultats d'analyse bactériologique sur les produits traités conformément
à l'invention.

Diverses autres caractéristiques et avantages du procédé, objet de la présente invention, apparaîtront à la lecture de la description détaillée faite ci-après, notamment en référence à quelques
exemples mentionnés à simple titre d'illustration.

La présente invention concerne un procédé de stérilisation qui est destiné à s'appliquer à des
matières protéiniques de natures très diverses, mais principalement à des matières protéiniques
d'origine animale, telles que par exemple la viande, les abats, les viscères et autres déchets d'abattage, tels que la peau et les carcasses de volaille, sous-produits gras, cretons, le sang et les os. Le
procédé de stérilisation selon l'invention s'applique donc à ces matières protéiniques considérées en
tant que matières premières, mais il s'applique également à des produits alimentaires finis tels que les
aliments pour chiens et chats, par exemple les produits dits à humidité intermédiaire, c'est-à-dire
contenant de 15 à 60% en poids d'humidité.

Conformément à la présente invention, ces matières protéiniques subissent d'abord une opération
de préparation qui est en fait destinée à fluidifier lesdites matières protéiniques et à les rendre aptes à
subir dans de bonnes conditions le traitement thermique à haute température en couche mince, en vue
d'assurer leur stérilisation.

Cette première phase de préparation peut varier quelque peu d'une matière protéinique à l'autre.
De façon générale, pour assurer la fluidification des matières protéiniques, on procède à un broyage
de ces matières pour obtenir une bouillie visqueuse dont les particules solides présentent une dimension moyenne de l'ordre de 0,1 à 20 mm, et de préférence de l'ordre de 0,5 à 10 mm. Cette opération de
broyage est classiquement réalisée dans des dispositifs de broyage habituellement utilisés par exemple dans l'industrie des aliments pour animaux.

En fonction de la nature exacte des matières protéiniques, on peut être éventuellement amené à
soumettre le broyat à une opération additionnelle d'agitation, en vue d'assurer une meilleure homogénéisation de ladite bouillie. Le cas échéant, on ajoute également de l'eau, ou une matière très riche en
eau, par exemple du sang, au cours de cette opération d'agitation.

Lors du traitement de viandes, l'abats, de déchets d'abattage et de mélanges de ce type habituellement utilisé dans l'industrie de l'alimentation animale, on obtient après cette première phase de

2

fluidification une bouillie visqueuse ayant une viscosité d'environ 100 Pa · s à 200 Pa · s.

Il convient de noter que cette seule opération mécanique de fluidification par broyage est insuffisante pour permettre la stérilisation ultérieure en couche mince qui, conformément à la présente invention, ne peut être assurée qu'au prix d'une opération d'hydrolyse de ladite bouillie de matières protéiniques. En fait, cette hydrolyse complète l'opération de fluidification puisqu'elle engendre un découpage partiel des matières protéiniques en leurs constituants de poids moléculaire plus faible, par exemple en albumoses, en peptones, polypeptides, dipeptides, peptides et en acides aminés. Mais cette hydrolyse remplit également une autre fonction essentielle, puisque, de par la transformation des protéines qu'elle assure, elle permet d'éviter des phénomènes de coagulation ou de modifications désagréables du goût desdites matières.

Conformément à la présente invention, l'opération d'hydrolyse peut être réalisée de diverses manières, par exemple par voie enzymatique. Pour ce faire, on fait appel à une enzyme protéolytique, par exemple choisie parmi la pepsine, la trypsine, la chymotrypsine, la papaïne, la chymopapaïne, la cathépsine ainsi que leurs mélanges. Une telle enzyme doit être ajoutée directement au broyat de matières protéiniques ou encore être formée in situ par addition d'un microorganisme sécrétant ladite enzyme, ou bien être apportée par un support naturellement riche en enzymes, tel que par exemple la caillette.

En variante, l'opération d'hydrolyse peut également être réalisée par addition d'acides à ladite bouillie visqueuse. A titre d'exemples des acides susceptibles d'être utilisés pour assurer cette opération d'hydrolyse on mentionnera l'acide phosphorique, l'acide formique, l'acide acétique, l'acide stéarique, l'acide oxalique, l'acide malonique, l'acide oléique, l'acide maléique, l'acide fumarique, l'acide phtalique, l'acide glycolique, l'acide lactique, l'acide glycérique, l'acide malique, l'acide tartrique, l'acide citrique ainsi que leurs mélanges, ainsi que tous les acides organiques ou minéraux généralement susceptibles d'être utilisés dans les produits alimentaires, notamment pour animaux, y compris les acides forts, tels que HCl et $H_2SO_4$.

On notera enfin que cette opération d'hydrolyse peut également être réalisée par addition d'une base à ladite bouillie visqueuse, par exemple par addition d'une base forte choisie parmi la soude, la potasse et la chaux.

A l'issu de cette opération d'hydrolyse, la matière protéinique est amenée à l'état d'une bouillie visqueuse présentant une viscosité comprise entre environ 0,1 Pa · s et environ 100 Pa · s, de préférence entre environ 1 Pa · s et environ 50 Pa · s.

Une telle opération d'hydrolyse, constituant l'une des étapes essentielles du procédé de stérilisation selon l'invention, est conduite à une température de l'ordre de 10 à 95°, et de préférence de l'ordre de 20 à 65°C, pendant une durée sensiblement comprise entre 3 minutes et 1 heure 30. Dans la pratique, l'opération d'hydrolyse a été réalisée de façon satisfaisante par voie enzymatique, par addition d'acides ou par addition de base en maintenant la température du broyat de matières protéiniques à environ 50°C pendant une durée de l'ordre de 5 minutes. Il convient de noter à ce propos qu'en jouant sur la température d'hydrolyse, on peut modifier assez sensiblement la durée de cette opération. Il est ainsi possible dans la pratique de mette à profit des temps de stockage intermédiaire ou encore des temps de transport entre l'abattoir et les lieux de l'installation de stérilisation pour effectuer cette opération d'hydrolyse.

Conformément à la présente invention, le traitement thermique proprement dit peut par exemple consister à:

— élever rapidement la température de l'hydrolysat, pendant une courte période de l'ordre de 1 à 5 minutes jusqu'à une température comprise entre environ 120 et environ 150°C,
— maintenir la température de l'hydrolysat entre environ 120 et environ 150°C pendant une courte durée de l'ordre de 3 secondes à 15 minutes, puis
— refroidir rapidement l'hydrolysat en une courte période d'environ 1 à 5 minutes, pour atteindre une température proche de la température d'utilisation, par exemple de la température ambiante.

Un tel traitement thermique à haute température en couche mince de l'hydrolysat est avantageusement mis en oeuvre dans un échangeur de chaleur à plaques, un échangeur de chaleur à surface râclée ou encore un échangeur de chaleur en spirale. L'échange thermique s'effectue ainsi toujours en une couche mince de matière, de l'ordre de quelques millimètres à quelques centimètres, au contact direct de la paroi de l'échangeur.

A titre d'exemples on précisera qu'en utilisant un échangeur de chaleur à surface râclée on obtient une stérilisation parfaite en élevant la température de l'hydrolysat entre 20 et 130°C à l'intérieur d'une période de 3 minutes, puis en maintenant la température pendant 3 minutes à 130°C puis en refroidissant par exemple de 130 à 30°C pendant une durée de 3 minutes. En faisant appel à un échangeur de chaleur à plaques, il est possible de raccourcir assez considérablement les périodes d'élévation de la température et de refroidissement, étant donné que dans un tel échangeur de chaleur à plaques on peut faire passer l'hydrolysat de matières protéiniques de 20 à environ 130° pendant une courte période de l'ordre de la minute.

L'opération de refroidissement rapide de l'hydrolysat ayant subi le traitement thermique à haute

3

température en couche mince peut être également mise en oeuvre dans un échangeur de chaleur du même type que celui utilisé pour le traitement thermique de stérilisation proprement dite, c'est-à-dire un échangeur de chaleur à plaques ou un échangeur de chaleur à surface râclée. Dans la pratique, et pour améliorer encore l'économie du procédé selon l'invention, il est bien sûr avantageux de prévoir un couplage du circuit de refroidissement de l'échangeur de chaleur assurant le refroidissement de la matière protéinique stérilisée avec le circuit de chauffage de l'échangeur de chalelur utilisé pour le traitement thermique de stérilisation.

On mentionnera ci-après à titre de simple illustration, quelques exemples de mise en oeuvre du procédé de stérilisation rapide selon la présente invention.

## Exemple 1

Un broyat de foie de porc est hydrolysé par acidification à un pH voisin de 4 obtenue par addition de 2% en poids d'acide phosphorique. L'hydrolyse est mise en oeuvre pendant une durée d'environ 15 minutes à une température de l'ordre de 50 à 60°C.

L'hydrolysat ainsi obtenu est porté de 60 à 134°C pendant une durée de 1 minute 30 secondes, puis l'hydrolysat est maintenu à une température de 134°C pendant 4 minutes 30 secondes pour assurer la stérilisation. Puis la température est ramenée au voisinage de la température ambiante pendant une durée d'environ 3 minutes.

Le traitement thermique de l'hydrolysat est réalisé dans un premier échangeur de chaleur à surface à plaques et l'opération de refroidissement est réalisée dans un second échangeur de chalelur à surface à plaques. Le circuit de fluide de chauffage du premier échangeur a été couplé au circuit de refroidissement du second échangeur, de manière à éviter des pertes d'énergie lors de la phase de refroidissement.

L'analyse bactériologique du broyat de foie de porc avant et après stérilisation selon l'invention a conduit aux résultats suivants:

| Germes/gramme | Avant stérilisation | Après stérilisation |
|---|---|---|
| Mesophiles | $>10^4$ | absence dans 0,1 g |
| Thermophiles | | |
| aérobie | $9.10^4$ | absence dans 0,1 g |
| anaérobie | $>10^5$ | absence dans 0,1 g |
| Spores | | |
| aérobie | $10^2$ | absence dans 1 g |
| anaérobie | $10^3$ | absence dans 1 g |

Le broyat de foie de porc ainsi stérilisé est ensuite conservé suivant des méthodes classiques comme le refroidissement, le conditionnement aseptique, ou une stabilisation physico-chimique. Dans tous les cas, aucune croissance microbienne n'est apparue après stockage du produit pendant 5 semaines à la température ambiante.

## Exemple 2

On réalise un broyat à base de matières protéiniques répondant à la composition suivante:

| | |
|---|---|
| Abats de porc | 48% en poids |
| Abats de boeuf | 40% en poids |
| Sang | 10% en poids |
| Chlorure de sodium | 2% en poids |

On réalise ensuite l'hydrolyse de ce broyat par addition de papaïne, l'hydrolyse étant conduite pendant environ 15 minutes à une température de l'ordre de 50°C. Puis le traitement thermique à haute température en couche mince est réalisé dans un echangeur à surface râclée, la phase de stérilisation étant obtenue en maintenant la température à 140°C pendant 3 minutes 30 secondes.

L'analyse bactériologique du broyat de foie de porc avant et après stérilisation selon l'invention a conduit aux résultats suivants:

| Germes/gramme | Avant stérilisation | Après stérilisation |
|---|---|---|
| Mesophiles | $5.10^5$ | absence dans 0,1 g |
| Thermophiles anaérobie | $> 10^5$ | absence dans 0,1 g |

Le broyat de foie de porc ainsi stérilisé est ensuite conservé suivant des méthodes classiques comme le refroidissement, le conditionnement aseptique, ou une stabilisation physico-chimique. Dans tous les cas, aucune croissance microbienne n'est apparue après stockage du produit pendant 5 semaines à la température ambiante.

Exemple 3

On réalise un broyat à base de matières protéiniques répondant à la composition suivante:

| | |
|---|---|
| Déchets de volaille | 70% en poids |
| Abats de boeuf | 15% en poids |
| Abats de porc | 10% en poids |
| Graisses animales | 5% en poids |

On réalise ensuite l'hydrolyse de ce broyat par addition de pepsine, l'hydrolyse étant conduite pendant environ 15 minutes à une température de l'ordre de 50°C. Puis le traitement thermique à haute température en couche mince est réalisé comme dans l'exemple 1, la phase de stérilisation étant obtenue de trois manières différentes:

a) à 120°C pendant 1 minute
b) à 120°C pendant 12 minutes
c) à 130°C pendant 10 minutes.

L'analyse bactériologique du broyat ci-dessus avant et après stérilisation selon l'invention a conduit aux résultats ci-après:

| Germes/gramme | Avant stérilisation | Après stérilisation |
|---|---|---|
| Mesophiles | $10^6$ | (a) $10^2$<br>(b) $10^2$<br>(c) absence dans 0,1 g |
| Thermophiles aérobie | $10^4$ | (a) $10^2$<br>(b) absence dans 0,1 g<br>(c) absence dans 0,1 g |
| Spores aérobie | $10^3$ | (a) absence dans 0,1 g<br>(b) absence dans 0,1 g<br>(c) absence dans 0,1 g |
| Thermophiles anaérobie | $10^5$ | (a) absence dans 0,1 g<br>(b) absence dans 0,1 g<br>(c) absence dans 0,1 g |
| Spores anaérobie | $10^4$ | |

Bien entendu, la présente invention n'est pas limitée aux modes de mise en oeuvre particuliers précédemment décrits, mais il est parfaitement possible, sans pour autant sortir du cadre de la présente invention, d'en imaginer un certain nombre de variantes, en particulier pour mieux s'adapter à tel ou tel type de matière protéinique.

## Revendications

1. Procédé de stérilisation rapide de matières protéiniques destinées à l'industrie alimentaire, en particulier de viandes et d'abats, caractérisé en ce que l'on effectue les opérations successives suivantes:

a) fluidification de ladite matière protéinique pour l'amener à l'état d'une bouillie visqueuse dont les particules solides ont une dimension moyenne de l'ordre de 0,1 à 20 mm, et de préférence de l'ordre de 0,5 à 10 mm,
b) hydrolyse de ladite bouillie, et
c) stérilisation par traitement thermique à haute température en couche mince de l'hydrolysat pendant une courte durée de l'ordre de 3 secondes à 15 minutes.

2. Procédé selon la revendication 1, caractérisé en ce que l'opération d'hydrolyse est mise en oeuvre de manière à atteindre une viscosité finale de l'hydrolysat, comprise entre environ 0,1 Pa·s et environ 100 Pa·s, de préférence entre environ 1 Pa·s et environ 50 Pa·s.

3. Procédé selon la revendication 2, caractérisé en ce que l'opération d'hydrolyse est réalisée par voie enzymatique.

4. Procédé selon la revendication 3, caractérisé en ce que l'hydrolyse enzymatique est réalisée à l'aide d'une enzyme protéolytique.

5. Procédé selon la revendication 4, caractérisé en ce que l'enzyme protéolytique est choisie parmi la pepsine, la trypsine, la chymotrypsine, la papaïne, la chymopapaïne, la cathépsine, et leurs mélanges ainsi que les extraits et supports desdites enzymes.

6. Procédé selon l'une des revendications 1 et 2, caractérisé en ce que l'opération d'hydrolyse est réalisée par addition d'acide à ladite bouillie visqueuse.

7. Procédé selon la revendication 6, caractérisé en ce que l'acide est choisi parmi les acides minéraux ou organiques d'usage alimentaire, tels que l'acide phosphorique, l'acide formique, l'acide acétique, l'acide stéarique, l'acide oxalique, l'acide malonique, l'acide oléique, l'acide maléique, l'acide fumarique, l'acide phtalique, l'acide glycolique, l'acide lactique, l'acide glycérique, l'acide malique, l'acide tartrique, l'acide citrique, et leurs mélanges.

8. Procédé selon l'une des revendications 1 et 2, caractérisé en ce que l'opération d'hydrolyse est réalisée par addition d'une base à ladite bouillie visqueuse.

9. Procédé selon la revendication 8, caractérisé en ce que la base forte est choisie parmi la soude, la potasse et la chaux.

10. Procédé selon l'une des revendications 1 à 9, caractérisé en ce que l'opération de stérilisation par traitement thermique à haute température en couche mince de l'hydrolysat est mise en oeuvre dans un échangeur de chaleur à plaques, un échangeur de chaleur à surface râclée ou un échangeur de chaleur en spirale.

11. Procédé selon l'une des revendications 1 à 10, caractérisé en ce que ledit traitement thermique consiste à:

— élever rapidement la température de l'hydrolysat, pendant une courte période de l'ordre de 1 à 5 minutes jusqu'à une température comprise entre environ 120 et environ 150°C,
— maintenir la température de l'hydrolysat entre environ 120 et environ 150°C pendant une courte durée de l'ordre de 3 secondes à 15 minutes, puis
— refroidir rapidement l'hydrolysat en une courte période d'environ 1 à 5 minutes, pour atteindre la température d'utilisation.

12. Procédé selon l'une des revendications 1 à 11, caractérisé en ce que ladite matière protéinique est constituée par une matière protéinique d'origine animale choisie parmi la viande, les abats, les déchets d'abattage, les sous-produits gras, le sang et leurs mélanges, ainsi que par les produits alimentaires finis à humidité intermédiaire.

13. Procédé selon la revendication 12, caractérisé en ce que ladite matière protéinique est à base de foie.

**Patentansprüche**

1. Verfahren zum raschen Sterilisieren von Proteinmaterialien, die für die Nahrungsmittelindustrie bestimmt sind, insbesondere von Fleisch und Innereien, dadurch gekennzeichnet, daß man die folgenden aufeinanderfolgenden Vorgänge durchführt:

a) Verflüssigung des genannten Proteinmaterials zum Herbeiführen des Zustandes eines viskosen Breis, dessen feste Teilchen eine mittlere Abmessung von 0,1 bis 20 mm, vorzugsweise 0,5 bis 10 mm, aufweisen,

b) Hydrolyse dieses Breis und

c) Sterilisierung durch Wärmebehandlung bei hoher Temperatur einer dünnen Schicht des Hydrolysats während eines kurzen Zeitraumes von 3 s bis 15 min.

2. Verfahren nach Anspruch 1, dadurch gekennzeichnet, daß der Hydrolysevorgang derart durchgeführt wird, daß eine Endviskosität des Hydrolysats von etwa 0,1 Pa·s bis etwa 100 Pa·s, vorzugsweise von etwa 1 Pa·s bis etwa 50 Pa·s erzielt wird.

3. Verfahren nach Anspruch 2, dadurch gekennzeichnet, daß der Hydrolysevorgang auf enzymatische Weise bewirkt wird.

4. Verfahren nach Anspruch 3, dadurch gekennzeichnet, daß die enzymatische Hydrolyse mit Hilfe eines proteolytischen Enzyms bewirkt wird.

5. Verfahren nach Anspruch 4, dadurch gekennzeichnet, daß das proteolytische Enzym ausgewählt wird unter Pepsin, Trypsin, Chymotrypsin, Papain, Chymopapain, Cathepsin und deren Mischungen sowie den Extrakten und Trägern der genannten Enzyme.

6. Verfahren nach einem der Ansprüche 1 und 2, dadurch gekennzeichnet, daß der Hydrolysevorgang durch Zugabe von Säure zum genannten viskosen Brei bewirkt wird.

7. Verfahren nach Anspruch 6, dadurch gekennzeichnet, daß die Säure ausgewählt wird unter den in der Nahrungsmittelindustrie verwendeten Mineral- oder organischen Säuren, wie Phosphor-, Ameisen-, Essig-, Stearin-, Oxal-, Malon-, Öl-, Malein-, Fumar-, Phthal-, Glykol-, Milch-, Glycerin-, Äpfel-, Wein- und Citronensäure und deren Mischungen.

8. Verfahren nach einem der Ansprüche 1 und 2, dadurch gekennzeichnet, daß der Hydrolysevorgang durch Zugabe einer Base zum genannten viskosen Brei bewirkt wird.

9. Verfahren nach Anspruch 8, dadurch gekennzeichnet, daß die starke Base ausgewählt wird unter Natronlauge, Kalilauge und Kalk.

10. Verfahren nach einem der Ansprüche 1 bis 9, dadurch gekennzeichnet, daß der Sterilisiervorgang durch Wärmebehandlung bei hoher Temperatur einer dünnen Schicht des Hydrolysats in einem Plattenwärmeaustauscher, einem Wärmeaustauscher mit geschabter Oberfläche oder einem Spiralwärmeaustauscher durchgeführt wird.

11. Verfahren nach einem der Ansprüche 1 bis 10, dadurch gekennzeichnet, daß die genannte Wärmebehandlung im

— raschen Erhöhen der Temperatur des Hydrolysats während eines kurzen Zeitraums von 1 bis 5 min bis auf eine Temperatur von etwa 120 bis etwa 150° C,

— Halten der Temperatur des Hydrolysats zwischen etwa 120 und etwa 150° C während eines kurzen Zeitraums von 30 s bis 15 min und dann

— raschen Abkühlen des Hydrolysats während eines kurzen Zeitraums von etwa 1 bis 5 min zum Erzielen der Verwenungstemperatur besteht.

12. Verfahren nach einem der Ansprüche 1 bis 11, dadurch gekennzeichnet, daß das genannte Proteinmaterial aus einem Proteinmaterial tierischen Ursprungs, ausgewählt unter Fleisch, Innereien, Schlachtabfällen, Fettnebenprodukten, Blut und deren Mischungen sowie Fertignahrungsmittelprodukten von mittlerer Feuchtigkeit zusammengesetzt ist.

13. Verfahren nach Anspruch 12, dadurch gekennzeichnet, daß das genannte Proteinmaterial auf Basis von Leber ist.

**Claims**

1. Process of rapidly sterilizing proteinaceous materials intended for the food industry, in particular meats and offal, characterised in that the following successive operations are carried out:

(a) fluidification of the said proteinaceous material to bring it into the state of a viscous paste, the solid particles of which have a mean size of the order of 0.1 to 20 mm, and preferably of the order of 0.5 to 10 mm,

(b) hydrolysis of the said paste, and

(c) sterilization of the hydrolysate by thermal treatment at high temperature in a thin layer for a short period of the order of 3 seconds to 15 minutes.

2. Process according to claim 1, characterised in that the hydrolysis is carried out in such a manner as to obtain a final viscosity of the hydrolysate of between about 0.1 Pa·s and about 100 Pa·s, and preferably between about 1 Pa·s about 50 Pa·s.

3. Process according to claim 2, characterised in that the hydrolysis is carried out enzymatically.

4. Process according to claim 3, characterised in that the enzymatic hydrolysis is carried out with the aid of a proteolytic enzyme.

5. Process according to claim 4, characterised in that the proteolytic enzyme is selected from pepsin, trypsin, chymotrypsin, papain, chymopain, cathepsin and mixtures thereof as well as extracts of and carriers for the said enzymes.

6. Process according to one of claims 1 and 2, characterised in that the hydrolysis is carried out by the addition of acid to the said viscous paste.

7. Process according to claim 6, characterised in that the acid is selected from mineral or organic acids used in foodstuffs, such as phosphoric acid, formic acid, acetic acid, stearic acid, oxalic acid, malonic acid, oleic acid, maleic acid, fumaric acid, phthalic acid, glycolic acid, lactic acid, glyceric acid, maleic acid, tartaric acid, citric acid and mixtures thereof.

8. Process according to one of claims 1 and 2, characterised in that the hydrolysis is carried out by the addition of a base to the said viscous paste.

9. Process according to claim 8, characterised in that the strong base is selected from soda, potash and lime.

10. Process according to one of claims 1 to 9, characterised in that the sterilization of the hydrolysate by thermal treatment at high temperature in a thin layer is carried out in a plate-type heat exchanger, a scraped surface heat exchanger or a spiral tube heat exchanger.

11. Process according to one of claims 1 to 10, characterised in that the said thermal treatment consists in:

rapidly raising the temperature of the hydrolysate for a short period of the order of 1 to 5 minutes until it attains a temperature of between about 120°C and about 150°C,
maintaining the temperature of the hydrolysate between about 120° and about 150°C for a short period of the order of from 3 seconds to 15 minutes, and then
rapidly cooling the hydrolysate for a short period of about 1 to 5 minutes to reach the temperature of utilization.

12. Process according to one of claims 1 to 11, characterised in that the said proteinaceous material is constituted by a proteinaceous material of animal origin selected from meat, offal, slaughter-house waste products, meat fat by-products, blood and mixtures thereof, as well as finished foodstuff products of intermediate moisture.

13. Process according to claim 12, characterised in that the said proteinaceous material is based on liver.